# EUROPEAN PATENT SPECIFICATION

(11) **EP 0 443 409 B1**
(45) Date of publication and mention of the grant of the patent: **03.05.1995**
(21) Application number: 91101922.2
(22) Date of filing: 12.02.1991
(51) Int. Cl.: G02B 6/36

(54) **Sleeve for optical connector**
Hülse zur Verbindung von Lichtleitern
Manchon pour la connexion de guides de lumière

(30) Priority: 21.02.1990 JP 40056/90
(43) Date of publication of application: 28.08.1991
(73) Proprietor: CIMEO PRECISION COMPANY, LIMITED, Kitassaku-Gun, Nagano-Ken 389-02 (JP)
(72) Inventor: Yamaura, Toshikazu, c/o Cimeo Precision Co Ltd., Kitasaku-gun, Nagano-Ken (JP); Nakamura, Osamu, c/o Cimeo Precision Co Ltd., Kitasaku-gun, Nagano-Ken (JP)
(74) Representative: Schickedanz, Willi, Dipl.-Ing.

(56) References cited:
- EP-A- 0 171 614
- DD-A- 216 119
- DE-A- 3 621 062
- US-A- 4 580 874

## Description

### Field of the Invention

This invention relates to a sleeve for holding a pair of coaxially abutting cylindrical ferrules into which optical fibers are inserted according to the preamble of claim 1.

### Prior Art

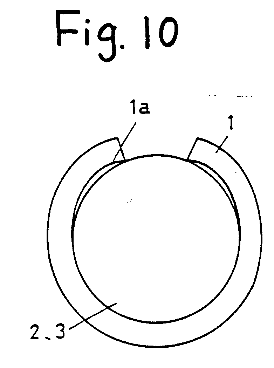

In a conventional optical connector, as shown in Fig. 9, tubular ferrules 2, 3 in which respective optical fibers 4, 5 are precisely inserted and fixed at predetermined positions are inserted into a cylindrical sleeve 1, whereby the ferrules are fixedly retained in coaxial relation.

The sleeve 1 in this optical connector has a slit la along the axial direction thereof. Further, the sleeve 1 has flexibility in the diametric direction by providing the slit 1a.

In this construction, the inner diameter of the sleeve 1 is set to be somewhat smaller than the outer diameter of the ferrules 2, 3. Consequently, when the ferrules 2, 3 are inserted into the sleeve 1, the slit la spreads slightly so that the ferrules 2, 3 are retained in a state in which it is possible to insert and withdraw the ferrules without effort.

When the ferrules 2, 3 are inserted into the sleeve 1 of this optical connector, the vicinity of the slit 1a is most deformed, as illustrated in Fig. 10.

When the sleeve 1 is thus deformed, the inner peripheral surface of the sleeve 1 in the vicinity of the slit la does not come into contact with the outer peripheral surfaces of the ferrules 2, 3, and the slit 1a widens.

As a result, the retaining force on the outer surfaces of the ferrules 2, 3 on the slit side is not sufficient over the entire axial direction. Further, the ferrules 2, 3 tend to be raised on the side of the slit 1a.

As a consequence, it is not possible to hold the ferrules 2, 3 in coaxial relation. This is a cause of optical loss.

Furthermore, stress which acts upon the sleeve 1 of the optical connector and the strain that is produced thereby concentrate in the axial direction on the side provided with the slit la and on the side at a symmetrical position.

As a result, this portion of the sleeve may break when inserting and withdrawing the ferrules 2, 3.

In addition, the gripping force holding the ferrules 2, 3 in the sleeve 1 concentrates in the axial direction on the side provided with the slit 1a and on the side at a symmetrical position.

Since the gripping force thus concentrates partially and in the pull-out direction, the ferrule extraction force, which is intimately related to the gripping force, differs depending upon the way that the ferrules are extracted or the state which the ferrules have been inserted. As a result, the extraction force is unstable.

Similar connectors are known from Japanese Utility Applications Nos. 52-78128 (= first publication No. 54-5445) and 54-45702 (= first publication No. 55-147011) as well as from US-A4 580 874, EP-A-0 171 614, DD-A-216 119 and DE-A-3 621 062. Still, from Japanese Utility Model first publication No. 58-118409 a pipe having a zig-zag slit is known. This pipe, however, is not used for connecting ferrules.

### Problem to be solved

It is the object of the present invention to provide a sleeve in which the gripping force that acts upon the ferrules of the sleeve, as well as the portion which undergoes deformation, is dispersed so as not to concentrate in the axial direction, thereby retaining the ferrules stably and stabilizing the extraction force.

### Solution of the Problem

The above-identified problem is solved by the features as defined in claim 1.

### Advantages of the Invention

The present invention provides a sleeve for an optical connector in which a pair of ferrules into which optical fibers have been inserted are inserted into a sleeve and coaxially abutted to connect the optical fibers, wherein the sleeve has a slit formed in a direction forming a cycle with respect to the axial direction. Accordingly, the gripping force which acts in the vicinity of the slit and at the position symmetrical with respect thereto, as well as deformation in the vicinity of the slit, will no longer concentrate in the axial direction. This assures stable retention of the ferrules, a stable extraction force, etc.

### Brief description of the drawings

- Fig. 1: is a perspective view illustrating a connector sleeve embodying the present invention;
- Fig. 2: is a plan view showing a state in which ferrules have been inserted into the sleeve of the Fig. 1;
- Figs. 3 through 5: are sectional views taken along lines A - A, B - B and C - C of Fig. 2, respectively;
- Figs. 6 through 8: are plan views illustrating other embodiments obtained by modifying the shape of a slit in the sleeve shown in Fig. 1; and
- Figs. 9 and 10: are a perspective view and a sectional view showing an optical connector sleeve according to the prior art.

### Embodiments

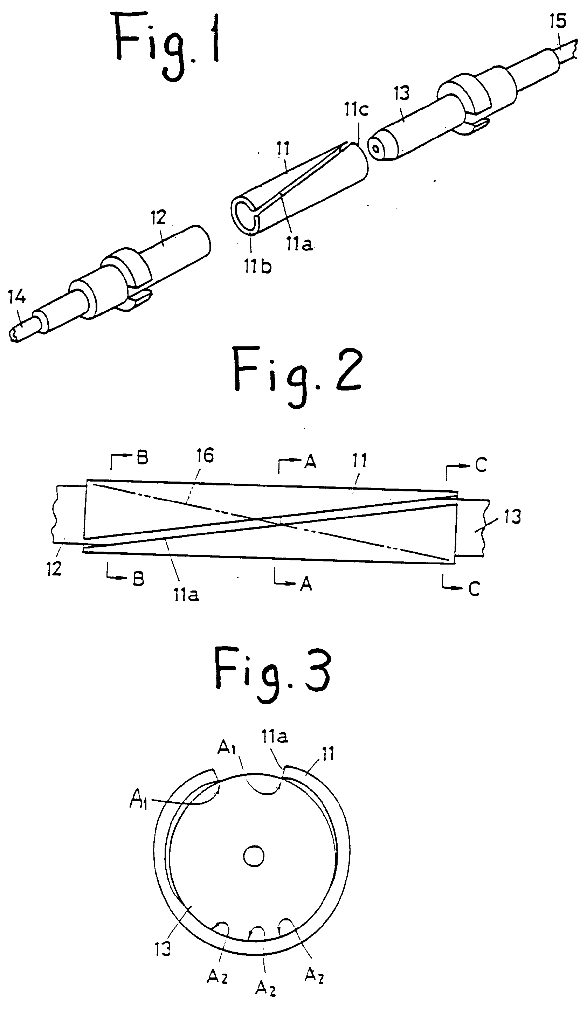

Referring now to Figs. 1 and 2, a sleeve 11 in the present embodiment is formed in the cylindrical shape and comprises a ceramic, a metal, etc.

The sleeve 11 has a slit 11a formed in a direction forming an angle with respect to the axial direction of the sleeve.

The slit 11a is formed diagonally form one end of the sleeve 11 to the other end, as shown in Fig. 2. Further, the sleeve 11 has openings 11b, 11e at the end portions thereof. Tubular ferrules 12, 13 in which optical fibers 14, 15 are respectively inserted precisely at predetermined positions are inserted into the openings 11b, 11c.

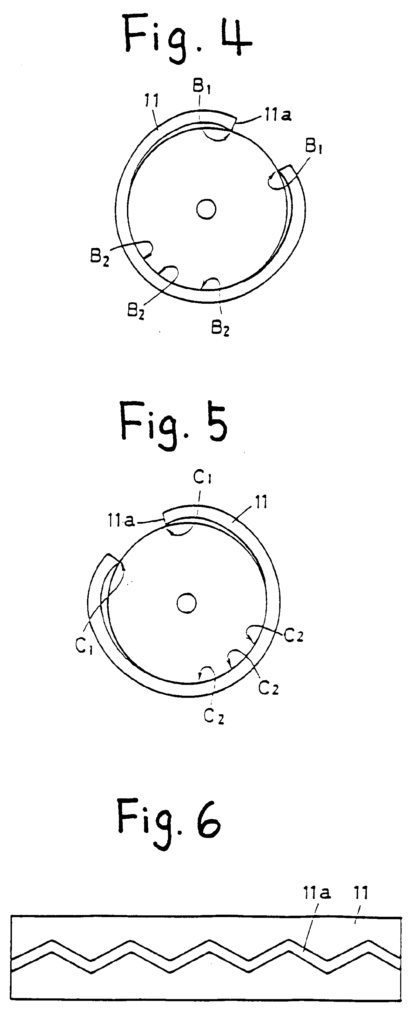

The ferrules 12, 13 inserted and held in the sleeve 11 are retained by a gripping force acting, in concentrated state, at positions A₁ in the vicinity of the slit 11a and at positions A₂ symmetrical with respect thereto, as shown in Fig. 3; at positions B₁ located to the right of positions A₁, A₂ along the outer periphery of the ferrule 12 near the left-hand end (in Fig. 2) of the sleeve 11, and at positions B₂ symmetrical with respect thereto, as shown in Fig. 4; and at positions C₁ located to the left of A₁, A₂ along the outer periphery of the ferrule 13 near the right-hand end (in Fig. 2) of the sleeve 11, and at positions C₂ symmetrical with respect thereto, as shown in Fig. 5.

If the positions A₁, B₁ and C₂ at which the gripping force acts in concentration are connected, this will substantially coincide with the direction of the slit 11a. If the positions A₂, B₂ and C₂ are connected, the result will be the two-dot chain line 16 in Fig. 2. Thus, the gripping-force lines intersect in a plane so that the ferrules 12, 13 are gripped broadly along their outer peripheral surfaces.

Figs. 6 through 8 are plan views illustrating other embodiments obtained by modifying the shape of the slit 11a in the sleeve 11 of the present invention.

The slit 11a of sleeve 11 shown in Fig. 6 is formed so as to curve in a zig-zag manner.

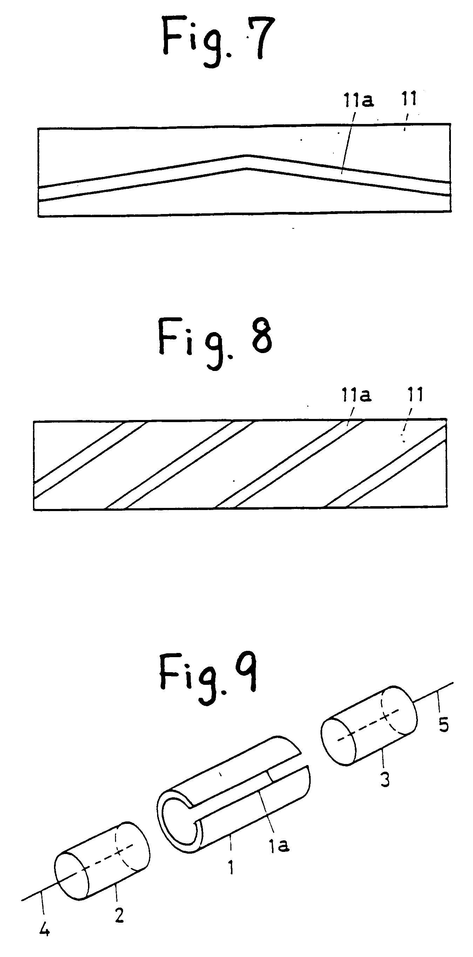

The slit 11a of the sleeve 11 shown in Fig. 7 is formed to have a chevron shape the apex whereof is located substantially at the center of the sleeve 11.

Further, the slit 11a of the sleeve 11 shown in Fig. 8 is formed to have a helical shape along the outer periphery of the sleeve 11.

These slits 11a all are formed in a direction forming an angle with respect to the axial direction of sleeve 11. By changing the angle or combining these slit shapes, it is possible to decide the positions at which the force acts on the ferrules.

### Advantages of the invention

In accordance with the present invention, it is possible to disperse the positions at which the force gripping the ferrules act in concentration along the outer periphery of the ferrules. As a result, it is possible to hold the ferrules stably and uniformly in their entirety.

In addition, portions at which deformation occurs in the vicinity of the slit also do not concentrate in the axial direction. Further, it is possible to retain the ferrules stably in their entirety. As a result, it is possible to reduce the occurrence of a poor connection between optical fibers caused by positional displacement such as lifting of the ferrules, and optical loss.

Further, since the positions at which the force gripping the ferrules acts are dispersed, it is possible to prevent the breakage of the ferrules, to stabilize the extraction force and to insert and withdraw the ferrule easily.

## Claims

1. A sleeve (11) for holding a pair of coaxially abutting cylindrical ferrules (12, 13) into which optical fibers are inserted, so as to achieve optical coupling between said optical fibers, wherein said sleeve has a longitudinal slit (11a) which extends from one end to the other end thereof and wherein the inner cross-section of said sleeve is slightly smaller than the outer cross section of the ferrules when said ferrules are not inserted therein, **characterized in** that said longitudinal slit (11a) extends in a direction non parallel to the axis of the sleeve.

2. A sleeve for an optical connector according to claim 1, **characterized in that** said slit (11a) is formed diagonally from one end of said sleeve (11) to the other end.

3. A sleeve for an optical connector according to claim 1, **characterized in that** said slit (11a) is formed so as to curve in a zig-zag manner from one end of said sleeve (11) to the other end.

4. A sleeve for an optical connector according to claim 1, **characterized in that** said slit (11a) is formed to have a chevron shape having an apex located substantially at the center of said sleeve (11).

5. A sleeve for an optical connector according to claim 1, **characterized in that** said slit (11a) is formed to have a helical shape along an outer periphery of said sleeve (11).

## Patentansprüche

1. Hülse (11) zur Halterung eines Paars von koaxial aneinanderstoßenden zylindrischen Preßklemmen (12, 13), in die optische Fasern eingefügt sind, um eine optische Kopplung zwischen diesen optischen Fasern zu erreichen, wobei die Hülse einen Längsschlitz (11a) aufweist, der sich von ihrem einen Ende zu ihrem anderen Ende erstreckt, und wobei der innere Querschnitt der Hülse etwas kleiner als der äußere Querschnitt der Preßklemmen ist, wenn die Preßklemmen nicht in sie eingeführt sind, **dadurch gekennzeichnet**, daß der Längsschlitz (11a) sich in einer Richtung erstreckt, die nicht parallel zu der Achse der Hülse ist.

2. Hülse für die Verbindung optischer Lichtleiter nach Anspruch 1, **dadurch gekennzeichnet**, daß der Schlitz (11a) diagonal von einem Ende der Hülse (11) zu ihrem anderen Ende vorgesehen ist.

3. Hülse für die Verbindung optischer Lichtleiter nach Anspruch 1, **dadurch gekennzeichnet,** daß der Schlitz (11a) so geformt ist, daß er von einem Ende der Hülse (11) zu ihrem anderen Ende eine Zickzacklinie beschreibt.

4. Hülse für die Verbindung optischer Lichtleiter nach Anspruch 1, **dadurch gekennzeichnet,** daß der Schlitz (11a) eine Chevron-Form hat, deren Scheitel im wesentlichen in der Mitte der Hülse (11) liegt.

5. Hülse für die Verbindung optischer Lichtleiter nach Anspruch 1, **dadurch gekennzeichnet**, daß der Schlitz (11a) wendelförmig entlang dem äußeren Umfang der Hülse (11) gebildet ist.

## Revendications

1. Manchon (11) destiné à maintenir une paire de ferrures (12, 13) cylindriques coaxialement en butée, dans lesquelles des fibres optiques sont insérées, afin d'établir un couplage optique entre ces fibres optiques, dans lequel ce manchon présente une fente longitudinale (11a) s'étendant d'une extrémité à l'autre extrémité de celui-ci, et dans lequel la section transversale intérieure du manchon est légèrement inférieure à la section transversale extérieure des ferrures lorsque ces ferrures n'y sont pas insérées, caractérisé en ce que la fente longitudinale (11a) s'étend dans un sens qui n'est pas parallèle à l'axe du manchon.

2. Manchon destiné à un raccord optique selon la revendication 1, caractérisé en ce que la fente (11a) s'étend en diagonale d'une extrémité du manchon (11) à l'autre extrémité.

3. Manchon destiné à un raccord optique selon la revendication 1, caractérisé en ce que la fente (11a) est ménagée afin qu'elle présente une forme de zig-zag d'une extrémité du manchon (11) à l'autre extrémité.

4. Manchon destiné à un raccord optique selon la revendication 1, caractérisé en ce que la fente (11a) est ménagée afin qu'elle présente une forme de chevron possédant un sommet situé sensiblement au centre du manchon (11).

5. Manchon destiné à un raccord optique selon la revendication 1, caractérisé en ce que la fente (11a) est ménagée afin qu'elle présente une forme hélicoïdale le long de la périphérie externe du manchon (11).
